# EUROPÄISCHE PATENTANMELDUNG

(11) **EP 3 902 116 A1**
(43) Veröffentlichungstag der Anmeldung: **27.10.2021**
(21) Anmeldenummer: 21158957.7
(22) Anmeldetag: 24.02.2021
(51) Int. Cl.: H02K 3/52

(54) **ELEKTRISCHE MASCHINE UND KRAFTFAHRZEUG**

(30) Priorität: 20.04.2020 DE 102020110664
(71) Anmelder: Audi AG, 85045 Ingolstadt (DE)
(72) Erfinder: Böckenhoff, Paul, 85049 Ingolstadt (DE); Schneider, Tom, 01157 Dresden (DE); Wetzel, Paul, 01069 Dresden (DE)

(57) **Zusammenfassung**

Elektrische Maschine umfassend einen Rotor (3) mit einem Rotorkör-per (5), wobei der Rotorkörper (5) mehrere, jeweils wenigstens eine aus mehreren Leiterschleifen (7) gebildete Rotorwicklung (8) tragende Pole (6) aufweist, wobei sich die Pole (6) in einer radialen Richtung des Ro-tors (3) erstrecken und die Leiterschleifen (7) durch jeweils zwischen zwei benachbarten Polen (6) ausgebildete Nuten (9) verlaufen, wobei in den Nuten (9) jeweils zwischen den Rotorwicklungen (8) der benachbarten Pole (6) ein sich in radialer Richtung erstreckendes Stützelement (10) angeordnet ist, welches an einem radial außenliegenden Ende der Nut (9) an einem zwischen den benachbarten Polen (6) radial ortsfest angeordneten Widerlagerelement (12) anliegt, wobei das Stützelement (10) bei einer Rotation und/oder einer Erwärmung des Rotors (3) die Leiterschleifen (7) gegen den Rotorkörper (5) drückt.

## Beschreibung

Die Erfindung betrifft eine elektrische Maschine umfassend einen Rotor mit einem Rotorkörper, wobei der Rotorkörper mehrere, jeweils wenigstens eine aus mehreren Leiterschleifen gebildete Rotorwicklung tragende Pole aufweist, wobei sich die Pole in einer radialen Richtung des Rotors erstrecken und die Leiterschleifen durch jeweils zwischen zwei benachbarten Polen ausgebildete Nuten verlaufen. Weiterhin betrifft die Erfindung ein Kraftfahrzeug.

Bei Elektromaschinen mit fremderregtem Rotor, beispielsweise bei fremderregten Synchronmaschinen, wird mithilfe von am Rotor der elektrischen Maschine angeordneten und von einem Strom durchflossen Rotorwicklungen das Rotorfeld der elektrischen Maschine erzeugt. Da der Rotor sich bei Betrieb der elektrischen Maschine dreht, müssen die Rotorwicklungen entgegen einer bei Betrieb der elektrischen Maschine auftretenden Fliehkraft mechanisch befestigt werden. Eine solche Befestigung der Rotorwicklungen kann beispielsweise durch einen vollständigen Verguss der Rotorwicklungen mit ihren Aufnahmen am Rotor erfolgen, so dass der Verguss als ein Stützkörper für die Rotorwicklungen dienen kann. Dabei können jedoch durch ein Aushärten des Vergusses Eigenspannungen entstehen, welche im Betrieb der elektrischen Maschine zu einem Adhäsionsversagen, beispielsweise einer Delamination der Vergussmasse vom Rotor, und/oder zu einem Kohäsionsversagen, das heißt zur Ausbildung von Rissen in der Vergussmasse, führen. Da solche Fehler in der Regel unsymmetrisch auftreten, kann dadurch eine Rotorunwucht entstehen, welche unerwünschte Folgen wie Schäden an einem Lager oder eine Geräuschemission bei einem Betrieb der Elektromaschine zur Folge haben.

Eine weitere bekannte Möglichkeit, um Rotorwicklungen am Rotor zu fixieren, ist der Einsatz von Stützblechen, welche beispielsweise zwischen zwei benachbarten Polen an die Wicklungen angelegt und am Rotor fixiert werden. Das Verwenden von Stützblechen kann dabei den Nachteil haben, dass diese sich unter Fliehkrafteinfluss radial aufweiten können, so dass sich die Wicklungen bereichsweise vom Stator ablösen. Dadurch kann ein unerwünschter Luftspalt zwischen den Wicklungen und dem Stator entstehen, welcher sich nachteilig auf eine Wärmeabfuhr aus den Rotorwicklungen auswirken kann. Eine Reduzierung der Kühlung der Rotorwicklungen kann sich dabei insbesondere negativ auf eine Dauerleistung des Rotors bzw. der elektrischen Maschine auswirken.

In US 2017/0 353 092 A1 wird eine Synchronmaschine mit Rotorspulen beschrieben, bei welcher Keilelemente zwischen den Rotorspulen eingesetzt sind, welche die Rotorspulen bei einer Rotation des Rotors gegen auftretende Fliehkräfte sichern. Ferner wird über die Keilelemente eine elektrische Isolierung zwischen den einzelnen Spulen erreicht.

Aus WO 2014/024 023 A2 ist ein Rotor für eine elektrische Maschine bekannt, zwischen dessen Rotorwicklung T-förmige Halteelemente angeordnet sind, um die Rotorspulen bei Betrieb einer den Rotor umfassenden elektrischen Maschine zu fixieren.

In DE 10 2004 062 162 A1 wird eine elektrische Maschine mit einem Schenkelpolläufer beschrieben, welcher einen Verdrängungskörper aufweist. Um die Kühlung der elektrischen Maschine zu verbessern, sind die Verdrängungskörper derart angeordnet und gestaltet, dass sie an ihrem Umfang zumindest abschnittsweise Kühlebenen mit den Erregerwicklungen ausbilden. Dadurch kann sich ein radialer Luftstrom entlang einer auflaufenden Polkante einstellen, welche an der anderen, ablaufenden Polkante wieder als ein radialer Luftstrom austritt, wobei der Verdrängungskörper kreisförmig umströmt wird.

Der Erfindung liegt die Aufgabe zugrunde, eine elektrische Maschine anzugeben, welche eine möglichst stabile Fixierung der Leiterschleifen der Rotorwicklungen ermöglicht.

Zur Lösung dieser Aufgabe ist bei einer elektrischen Maschine der eingangs genannten Art erfindungsgemäß vorgesehen, dass in den Nuten jeweils zwischen den Rotorwicklungen der benachbarten Pole ein sich in radialer Richtung erstreckendes Stützelement angeordnet ist, welches an einem radial außenliegenden Ende der Nut an einem zwischen den benachbarten Polen radial ortsfest angeordneten Widerlagerelement anliegt, wobei das Stützelement bei einer Rotation und/oder einer Erwärmung des Rotors die Leiterschleifen gegen den Rotorkörper drückt.

Der Rotorkörper umfasst mehrere Pole, wobei zwischen zwei benachbarten Polen jeweils eine Nut ausgebildet ist, in der die Leiterschleifen der jeweils an den benachbarten Polen angeordneten Rotorwicklungen angeordnet sind. Zwischen den Rotorwicklungen zweier benachbarter Pole, also zwischen den Leiterschleifen der an benachbarten Polen angeordneten Rotorwicklungen, ist in einer Nut ein Stützelement angeordnet, welches sich in einer radialen Richtung durch die Nut erstreckt. Das Stützelement liegt dabei an einem radial außenliegenden Ende der Nut an einem Widerlagerelement, welches zwischen den benachbarten Polen zumindest radial ortsfest befestigt ist, an. Dadurch, dass das Stützelement an dem Widerlagerelement anliegt, kann es bei einer Rotation des Rotors radial an dem Widerlagerelement abgestützt werden, so dass keine oder im Wesentlichen keine Aufweitung des Stützelements in radialer Richtung möglich ist. Dies ermöglicht es, dass sich das Stützelement bei einer im Betrieb der elektrischen Maschine auftretenden Rotation und/oder bei einer im Betrieb der elektrischen Maschine auftretenden Erwärmung zumindest bereichsweise in Umfangsrichtung weiten kann und die Leiterschleifen somit gegen den Rotorkörper drückt. Dazu kann insbesondere vorgesehen sein, dass sich das Stützelement entlang seiner radialen Erstreckung jeweils zumindest teilweise in Umfangsrichtung in direktem oder mittelbarem Kontakt mit den Leiterschleifen der Rotorwicklungen befindet, so dass eine auftretende Aufweitung des Stützelements einen auf die Leiterschleifen der Rotorwicklungen wirkenden Druck erzeugt. Die sich in radialer Richtung erstreckenden Seitenflächen des Stützelements können dazu eine mit der Form der sich ebenfalls in radialer Richtung erstreckenden und jeweils zur Mitte der Nut bzw. zum Stützelement gerichteten Seitenflächen der Rotorwicklungen korrespondierende Form aufweisen, um jeweils eine möglichst große Kontaktfläche zur Ausübung des Druckes zu bilden.

Durch das Stützelement können die Leiterschleifen gegen den Rotorkörper gedrückt werden. Insbesondere können die Leiterschleifen dabei jeweils gegen den sie tragenden Pol bzw. gegen weitere Leiterschleifen derselben Rotorwicklung gedrückt werden, so dass insgesamt die zwischen den benachbarten Polen und dem Stützelement angeordneten Leiterschleifen jeweils gegen den Rotorkörper bzw. einen der benachbarten Pole des Rotorkörpers gedrückt werden. Je nach Form der Wicklung und/oder des Stützelements ist es auch möglich, dass die Leiterschleifen zumindest teilweise auch gegen ein radial innenliegendes Ende der Nut, also in Richtung einer Rotationsachse des Rotors, gedrückt werden. Durch das Stützelement können also die Leiterschleifen der an benachbarten Polen angeordneten Rotorwicklungen in die Nut hinein, also gegen die von den Polen gebildeten Wände der Nut sowie gegen einen den radial innenliegenden Boden der Nut bildenden Abschnitt des Rotorkörpers gedrückt werden. Das Stützelement kann auch als Verdrängerkörper bezeichnet werden.

Durch die radiale Abstützung an dem ortsfest angeordneten und insbesondere bei Betriebsbedingungen des Rotors als nicht oder im Wesentlichen nicht verformbar ausgeführten Widerlagerelement wird es ermöglicht, dass eine durch eine Rotation des Rotors und/oder eine Erwärmung des Rotors auftretende Verformung des Stützelements eine zumindest bereichsweite Aufweitung des Stützelements in Umfangsrichtung bewirkt. Durch das Abstützen des Stützelements im radial außenliegenden Ende der Nut an dem Widerlagerelement wird verhindert, dass sich das Stützelement aufgrund der Rotation bzw. der Erwärmung in radialer Richtung aus der Nut heraus verformen kann, so dass durch die Kombination aus dem Widerlagerelement und dem Stützelement eine verbesserte Fixierung der Leiterschleifen in der Nut erreicht werden kann.

Dies hat den Vorteil, dass eine Funktionalität des Elektromotors auch bei extremen Belastungen, beispielsweise bei sehr hohen Drehzahlen und/oder sehr hohen Temperaturen, aufrechterhalten werden kann. Dadurch, dass auch bei den bei hoher Rotation entstehenden großen Fliehkräften eine korrekte Positionierung der Leiterschleifen in den Nuten des Rotors erreicht wird, kann vorteilhaft vermieden werden, dass Luftspalte zwischen den Leiterschleifen bzw. den Rotorwicklungen und dem Rotorkörper auftreten. Dies hat den Vorteil, dass der Wärmeleitpfad zwischen den Rotorwicklungen und dem Rotorkörper auch unter Fliehkrafteinfluss nicht unterbrochen wird. Weiterhin kann auch durch ein thermisch bedingtes Ausdehnen des Stützkörpers ein gegen den Rotorkörper gerichteter Druck auf die Leiterschleifen ausgeübt werden.

Dies ermöglicht, dass die elektrische Maschine auch für Hochdrehzahlantriebe, beispielsweise zum Antrieb eines Kraftfahrzeugs, mit Vorteil eingesetzt werden kann. Bei solchen Maschinen können beispielsweise Drehzahlen von bis zu 17.000 Umdrehungen pro Minute auftreten und es können Temperaturen von bis zu 180 °C erreicht werden, wobei insbesondere durch das Stützelement und seine Abstützung an dem Widerlagerelement stets eine feste Fixierung der Leiterschleifen und somit ein möglichst spielfreier Sitz der Leiterschleifen bzw. der Rotorwicklungen an dem Rotor erreicht wird.

Gegenüber einem vollständigen Verguss der Rotorwicklungen in den Nuten bietet sich der Vorteil, dass auf die Kosten eines Vergussmaterials, beispielsweise eines Epoxidharz, verzichtet werden kann und dass auch kein kosten- und zeitintensives Vergussverfahren wie ein vakuumbasierter Verguss oder ein Druckgelieren eingesetzt werden muss. Auf die dazu verwendeten Vorrichtungen und Prozessschritte, insbesondere auf ein zeitintensives Aushärten des Vergussmaterials, kann vorteilhaft verzichtet werden. Im Gegensatz zu einem vollständigen Wicklungsverguss in den Nuten können durch die Verwendung des Stützelements und des Widerlagerelements Delaminationen von beispielsweise durch jeweils vergossene Leiterbahnen gebildete Rotorwicklungen zugelassen werden, da eine stabile Fixierung der Rotorwicklungen in den Nuten weiterhin möglich ist. Durch das Zulassen von Delaminationen in den vergossenen Rotorwicklungen können sich Eigenspannungen, welche bei einem Aushärten bei jeweils vergossen ausgeführten Rotorwicklungen auftreten können, reduziert werden.

Es ist möglich, dass in axialer Richtung des Rotorkörpers mehrere Widerlagerelemente und/oder mehrere Stützelemente hintereinander angeordnet sind. Dabei kann ein Stützelement an mehreren Widerlagerelementen abgestützt sein und/oder es können mehrere Stützelemente an einem Widerlagerelement abgestützt sein.

Erfindungsgemäß kann vorgesehen sein, dass das Stützelement zumindest teilweise aus einem thermoplastischen Material besteht. Dabei kann beispielsweise ein thermoplastisches Material gewählt werden, welches sich bei den auftretenden Betriebstemperaturen, beispielsweise bei Temperaturen bis 200 °C oder mehr, nicht plastifiziert. Dadurch kann gewährleistet werden, dass das zur Bildung des Stützelements verwendete Material, welches insbesondere ein Polymer ist, bei allen auftretenden Betriebsbedingungen hinreichend weich ist, so dass es sich fliehkraftbedingt verformen kann und somit durch die radiale Abstützung an dem Widerlagerelement zu einer Fixierung der Leiterschleifen beitragen kann. In einer bevorzugten Ausgestaltung der Erfindung kann vorgesehen sein, dass das Stützelement zumindest teilweise aus Polyamid besteht. Es ist beispielsweise möglich, dass das Stützelement aus Polyamid und eingebetteten Glasfasern gebildet ist.

Erfindungsgemäß kann vorgesehen sein, dass das Widerlagerelement an zwei benachbarten Polen befestigt ist, wobei ein sich zwischen den Polen erstreckender und die Nut überspannender Abschnitt des Widerlagerelements, insbesondere vollständig, an dem Stützelement anliegt. Das Widerlagerelement ist dabei zumindest gegenüber radialen Bewegungen und Bewegungen in Umfangsrichtung befestigt, so dass es sich bei einer Rotation des Rotors der elektrischen Maschine nicht bewegt, sondern ortsfest verbleibt. Durch eine möglichst große Anlagefläche des Stützelements an dem Widerlagerelement, also durch ein insbesondere vollständiges Anliegen des Stützelements an dem die Nut überspannenden Abschnitt des Widerlagerelements, wird ein thermisch und/oder fliehkraftbedingtes Aufweiten des Stützelements in Umfangsrichtung insbesondere an dem radial außenliegenden Ende des Stützelements, das heißt an dem am Widerlagerelement anliegenden Ende des Stützelements, ermöglicht.

In einer bevorzugten Ausgestaltung der Erfindung kann vorgesehen sein, dass die gegenüberliegenden Pole jeweils eine Befestigungsnut aufweisen, wobei das Widerlagerelement durch jeweils einen randseitigen Eingriff in die Befestigungsnuten an den Polen befestigt ist. Das Widerlagerelement kann beispielsweise plattenförmig ausgestaltet sein, so dass zwei gegenüberliegende Kanten der Platte in die in Umfangsrichtung beabstandeten, an gegenüberliegenden Polen ausgebildeten Befestigungsnuten eingreifen können. Dies ermöglicht eine Fixierung des Widerlagerelements sowohl in radialer Richtung als auch in Umfangsrichtung. Die Ausbildung der Befestigungsnuten an den Polen kann beispielsweise dazu verwendet werden, um das Widerlagerelement in axialer Richtung bei einer Montage der elektrischen Maschine zwischen den gegenüberliegenden Polen einzuschieben. Auch eine Befestigung des Widerlagerelements in axialer Richtung ist möglich.

Erfindungsgemäß kann vorgesehen sein, dass das Widerlagerelement ein Deckschieber ist. Ein als Deckschieber ausgebildetes Widerlagerelement dient dabei zum Verschließen eines radial außenliegenden Endes der Nut, insbesondere über die gesamte axiale Länge der Nut.

Erfindungsgemäß kann vorgesehen sein, dass das Widerlagerelement zumindest teilweise aus Metall, insbesondere einem austenitischen Stahl, oder aus Keramik besteht. Bei dem Widerlagerelement kann es sich beispielsweise um ein gestanztes Blechteil handeln. Das Ausbilden des Widerlagerelements aus Metall, insbesondere aus einem austenitischen Stahl, oder aus Keramik hat den Vorteil, dass eine hohe mechanische Festigkeit des Widerlagerelements erreicht werden kann, so dass keine oder im Wesentlichen keine Verformungen des Widerlagerelements in axialer Richtung bei einer Rotation des Rotors auftreten.

In einer bevorzugten Ausgestaltung der Erfindung kann vorgesehen sein, dass eine Breite eines Querschnittprofils des Stützelements zumindest abschnittsweise in radialer Richtung nach außen zunimmt. Durch ein Aufweiten des Querschnittprofils des Stützelements, insbesondere zu dem radial nach außenliegenden Ende hin, kann vorteilhaft bewirkt werden, dass sich beim Aufweiten, neben der seitlich wirkenden Kraftkomponente, auch eine zumindest teilweise radial nach innen gerichtete Kraftkomponente, welche auf die Leiterschleifen wirkt, ergibt. Dadurch kann vorteilhaft erreicht werden, dass die Wicklung zumindest teilweise auch in radialer Richtung in die Nut und/oder gegen den die Rotorwicklung tragenden Pol gedrückt wird. Insbesondere kann das Querschnittsprofil des Stützelements korrespondierend zu den jeweils zur Mitte der Nut hin gerichteten Konturen der Rotorwicklungen ausgeführt werden, so dass das Stützelement in radialer Richtung möglichst großflächig, insbesondere über die gesamte radiale Ausdehnung, jeweils an den zwei benachbarten Rotorwicklungen anliegen kann. Das Stützelement kann insbesondere zumindest abschnittsweise nach außen hin breiter werden. Beispielsweise ist möglich, dass der Querschnitt des Stützelements Y-förmig ist, wobei das breitere, sich aufweitende Ende an dem Widerlagerelement anlegt. Der untere, dünnere Abschnitt des Querschnitts kann dabei mit seinem unteren Ende insbesondere an einem Boden der Nut an den Rotorkörper angrenzen.

Erfindungsgemäß kann vorgesehen sein, dass das Stützelement und das Widerlagerelement über eine wenigstens eine Nut-Feder-Verbindung umfassende formschlüssige Verbindung ineinander eingreifen. Dabei kann vorgesehen sein, dass das Widerlagerelement und/oder das Stützelement wenigstens eine Befestigungsnut aufweist, wobei der jeweils andere Teil eine korrespondierende Feder aufweist, welche in die Befestigungsnut eingreift. Dadurch wird eine formschlüssige Befestigung des Stützelements an dem Widerlagerelement, insbesondere in Umfangsrichtung, ermöglicht.

In einer bevorzugten Ausgestaltung der Erfindung kann vorgesehen sein, dass an einer Innenwand der Nuten und/oder an dem Stützelement eine Nutisolation, insbesondere ein isolierendes Papier und/oder eine isolierende Beschichtung, angeordnet ist. Diese Nutisolation trägt beispielsweise dazu bei, die Rotorwicklungen gegenüber dem beispielsweise auf einem Massepotential liegenden Rotorkörper zu isolieren. Es ist möglich, dass auch zwischen dem Stützelement und den Rotorwicklungen eine Nutisolation vorgesehen ist, wobei in diesem Fall insbesondere das Stützelement, die Nutisolation und die Rotorwicklungen jeweils direkt aneinander anliegen.

Erfindungsgemäß kann vorgesehen sein, dass der Rotorkörper aus einem mehrere Bleche umfassenden Blechpaket gebildet ist und das Stützelement wenigstens ein sich in axialer Richtung erstreckendes Durchgangsloch aufweist, wobei in dem wenigstens einen Durchgangsloch ein Zuganker zur Befestigung der Bleche aneinander angeordnet ist. Die den Rotorkörper bildenden Bleche können dabei insbesondere axial aneinander gereiht sein. Durch das Vorsehen wenigstens eines axialen Durchgangslochs kann ein Zuganker in dem Stützelement aufgenommen werden, welcher zum Befestigen bzw. zum Verspannen der Bleche des Rotorkörpers in axialer Richtung verwendet werden kann. Dabei kann insbesondere vorgesehen sein, dass der Zuganker das im Stützelement ausgebildete Durchgangsloch vollständig ausfüllt, um ein Verformen des Stützelements in die Kavität des Durchgangslochs hinein vermieden werden kann.

Für ein erfindungsgemäßes Kraftfahrzeug ist vorgesehen, dass es eine erfindungsgemäße elektrische Maschine umfasst. Die elektrische Maschine kann dabei insbesondere ein Traktionselektromotor des Kraftfahrzeugs sein, welcher zum Antrieb des Kraftfahrzeugs verwendet werden kann. Bei der elektrischen Maschine kann es sich insbesondere um einen Hochdrehzahlantrieb, welcher Drehzahlen bis zu 17.000 Umdrehungen pro Minute erreichen kann, handeln. Es ist möglich, dass das Kraftfahrzeug mehrere dieser elektrischen Maschinen, beispielsweise als einzelne Achsen und/oder einzelnen Räder zugeordnete Traktionselektromotoren, umfasst.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: eine Seitenansicht eines erfindungsgemäßen Kraftfahrzeugs,
- Fig. 2: eine Seitenansicht eines ersten Ausführungsbeispiels einer erfindungsgemäßen Maschine, und
- Fig. 3: eine Seitenansicht eines zweiten Ausführungsbeispiels einer erfindungsgemäßen elektrischen Maschine.

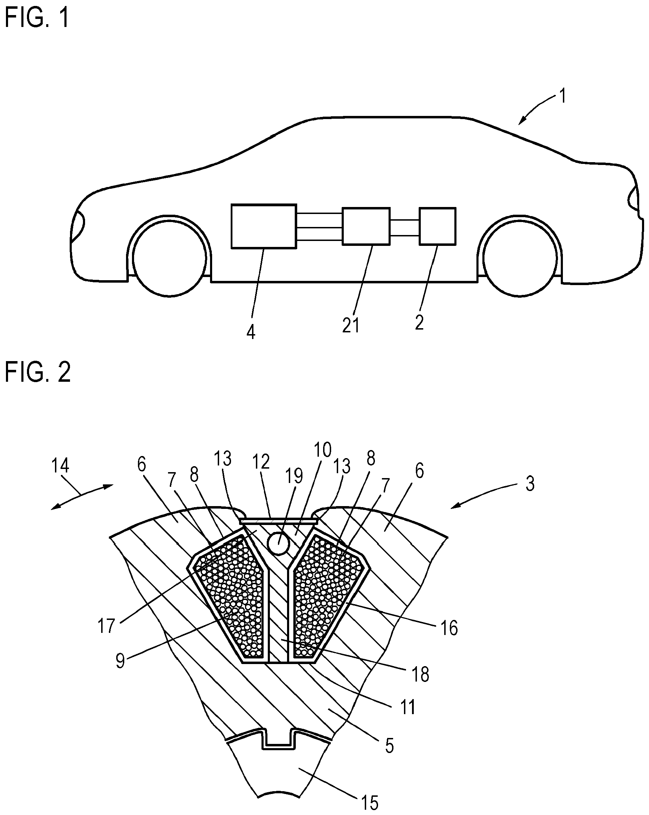

In Fig. 1 ist eine Seitenansicht eines Kraftfahrzeugs 1 dargestellt. Das Kraftfahrzeug 1 umfasst eine elektrische Maschine 2, welche als ein Traktionselektromotor des Kraftfahrzeugs 1 ausgebildet ist. Das Kraftfahrzeug 1 kann durch die elektrische Maschine 2 in einem elektrischen Fahrbetrieb angetrieben werden. Zur Versorgung mit elektrischer Energie ist die elektrische Maschine 2 über eine Leistungselektronik 21 mit einem Traktionsenergiespeicher 4, beispielsweise einer Traktionsbatterie, des Kraftfahrzeuges 1 verbunden. Es ist möglich, dass das Kraftfahrzeug mehr als eine als Traktionselektromotor ausgebildete elektrische Maschine 2 aufweist, wobei die mehreren elektrischen Maschinen 2 jeweils einer Achse und/oder einem Rad des Kraftfahrzeuges 1 zugeordnet sind.

In Fig. 2 ist eine Seitenansicht eines Rotors 3 einer elektrischen Maschine 2 dargestellt. Der Übersicht halber ist dabei vom Rotor nur ein kreissegmentförmiger Ausschnitt gezeigt. Der gesamte Rotor 3 ist dabei kreisförmig ausgeführt und umfasst mehrere, beispielsweise acht, identisch ausgebildete und aneinander anschließende Kreissegmente entsprechend dem gezeigten Abschnitt.

Der Rotor 3 umfasst einen Rotorkörper 5, welche mehrere Pole 6 aufweist. Jeder der Pole 6 trägt eine aus mehreren Leiterschleifen 7 gebildete Rotorwicklung 8. Die Leiterschleifen 7 erstrecken sich jeweils durch eine Nut 9, welche jeweils zwischen zwei benachbarten Polen 6 ausgebildet ist. Zwischen den Leiterschleifen 7 zweier benachbarter Rotorwicklungen 8 ist im Inneren der Nut ein Stützelement 10 angeordnet. Dieses Stützelement 10 erstreckt sich von einem Boden 11 der Nut 9, welcher von dem Rotorkörper 5 gebildet wird, zu einem an einem radial außenliegenden Ende der Nut 9 ortsfest angeordneten Widerlagerelement 12.

Das Widerlagerelement 12 ist dabei plattenförmig ausgebildet, wobei zwei gegenüberliegende, in axialer Richtung des Rotors verlaufende Kanten des Widerlagerelements 12 jeweils in eine an den Polen 6 ausgebildete Befestigungsnut 13 formschlüssig eingreifen. Das Widerlagerelement 12 ist durch den formschlüssigen Eingriff in die Befestigungsnuten 13 radial und in Umfangsrichtung ortsfest an dem Rotorkörper 5 bzw. an den jeweils gegenüberliegenden Polen 6 angeordnet. Das Stützelement 10 liegt an dem die Nut 9 überspannenden Abschnitt des Widerlagerelements 12 an.

Um in radialer Richtung des Rotors eine hohe Steifigkeit des Widerlagerelements 12 zu erreichen, kann dieses insbesondere ganz oder teilweise aus austenitischem Stahl bestehen. Dies bewirkt, dass bei einer Rotation des Rotors in die durch den Pfeil 14 dargestellte Umfangsrichtung um eine Rotorachse 15 auch durch die bei hohen Drehzahlen auftretenden Fliehkräfte keine oder im wesentlichen keine Verformung des Widerlagerelements 12 erfolgt.

Das Stützelement 10 besteht zumindest teilweise aus einem thermoplastischen Material, beispielsweise aus Polyamid oder aus Polyamid und Glasfasern, und ist derart ausgeführt, dass es bei einer Rotation und/oder einer Erwärmung des Rotors 3 die Leiterschleifen 7 der Rotorwicklungen 8 gegen den Rotorkörper 5 drückt. Dazu ist das Stützelement bei den auftretenden Betriebstemperaturen hinreichend weich ausgeführt. Das Stützelement 10 weist eine Querschnittsform auf, welche mit der jeweils zur Mitte der Nut 9 gerichteten Form der Rotorwicklungen 8 korrespondiert, so dass ein möglichst direktes Anliegen des Stützelements 10 an den Rotorwicklungen 8 ermöglicht wird. Das Stützelement 10 kann dabei entweder direkt an den beispielsweise mehrere miteinander vergossene Leiterschleifen 7 umfassenden Rotorwicklungen 8 anliegen. Es ist auch möglich, dass eine beispielsweise zwischen den Rotorwicklungen 8 und den Polen 6 bzw. dem Rotorkörper 5 vorgesehene Nutisolation 16 sich ebenfalls zwischen dem Stützelement 10 und den Rotorwicklungen 8 erstreckt. Die Nutisolation 16 kann beispielsweise aus einem isolierenden Papier bestehen oder durch eine Sprühbeschichtung gebildet sein.

Bei Rotation des Rotors 3 bei Betrieb der elektrischen Maschine 2 wirken Fliehkräfte auf den Rotor 3 bzw. seine einzelnen Bestandteile. Diese Fliehkräfte bewirken eine Verformung des Stützelements 10, welche aufgrund der radialen Abstützung des Stützelements 10 an dem Widerlagerelement 12 die Rotorwicklungen 8 bzw. die Leiterschleifen 7 der Rotorwicklungen 8 gegen den Rotorkörper 5 drücken.

Das Stützelement 10 umfasst dabei einen Y-förmigen Querschnitt, mit einem sich in radial nach außen weisender Richtung verbreiternden Abschnitt 17, welcher an seinem radial außenliegenden Ende an dem Widerlagerelement 12 anliegt, sowie einem geraden Abschnitt 18,der in eine entsprechende, sich verschmälernde Geometrie der beiden benachbarten Wicklungen 8 formschlüssig eingreift. Durch den im Abschnitt 17 verbreiterten Querschnitt des Stützelements 10 wird erreicht, dass eine durch eine Fliehkraft und/oder eine Erwärmung erreichte Verbreiterung des Stützelements 10 insbesondere im Bereich des Abschnitts 17 die Rotorwicklungen 8 bzw. ihre Leiterschleifen 7 gegen die sie jeweils tragenden Pole 6 bzw. gegen den Boden 11 der Nut 9 drückt. Denn durch diese ineinander greifenden Geometrie ergibt sich beim Aufweiten des Stützelements 10 eine radial nach innen gerichtete Komponente auf die Wicklungen 8, die diese in die Nut 9 drückt. Auf diese Weise wird eine Fixierung der Rotorwicklungen 8 in dem Rotor 3 auch bei hohen Drehzahlen und/oder bei hohen Temperaturen, welche beim Betrieb der den Rotor 3 umfassenden elektrischen Maschine 2 auftreten können, erreicht. Das Drücken der Leiterschleifen 7 bzw. der Rotorwicklungen 8 in die Nut 9 hinein bzw. gegen die jeweils die Rotorwicklung tragenden Pole 6 und/oder den Boden 11 der Nut wird erreicht, dass keine Luftspalte zwischen den Rotorwicklungen 8 und dem Rotorkörper 5 entstehen. Dadurch kann ein Wärmefluss von den Rotorwicklungen 8 zu dem Rotorkörper 5 möglichst ungehindert fließen, wodurch eine Kühlung der Rotorwicklungen 8 bei Betrieb der den Rotor 3 umfassenden elektrischen Maschine 2 vereinfacht wird.

Auch eine Ausdehnung des Stützelements 10 aufgrund von beim Betrieb der elektrischen Maschine 2 auftretender Erwärmung des Rotors 3 sorgt entsprechend für einen seitlichen und radialen Druck, welcher die Rotorwicklungen 8 bzw. ihre Leiterschleifen 7 in die Nut 9 hineindrückt. Eine Verformung des Stützelements 10 in radialer Richtung aus der Nut hinaus wird aufgrund der Abstützung des Stützelements 10 an dem Widerlagerelement 12 vorteilhaft vermieden.

Es ist möglich, dass das Stützelement 10 ein Durchgangsloch 19 aufweist, welches sich in axialer Richtung, das heißt in Fig. 2 in Richtung der Bildebene, durch das Stützelement 10 erstreckt. In diesem Durchgangsloch 19 kann ein Zuganker (hier nicht dargestellt) angeordnet sein, mit welchem axial aneinander gereihte Bleche, welche den Rotorkörper 5 bilden, aneinander befestigt werden können.

Das Widerlagerelement 12 ist als ein Deckschieber ausgeführt, welcher die Nut 9 an dem in radialer Richtung außenliegenden Ende insbesondere über die gesamte axiale Länge des Rotors 3 verschließt. Es ist auch möglich, dass anstelle eines einzigen Widerlagerelements 12 mehrere, insbesondere in axialer Richtung jeweils direkt aneinander anschließende Widerlagerelemente 12 verwendet werden. Auch ein Vorsehen mehrerer axial aneinandergereihter Stützelemente ist möglich. Das Widerlagerelement 12 kann beispielsweise als ein gestanztes Blechteil aus einem Metall, insbesondere aus einem Stahl oder einem austenitischen Stahl, gefertigt sein. Es ist jedoch auch möglich, das Widerlagerelement 12 aus einem anderen, hinreichend steifen und festen Werkstoff, beispielsweise aus Keramik, auszuführen.

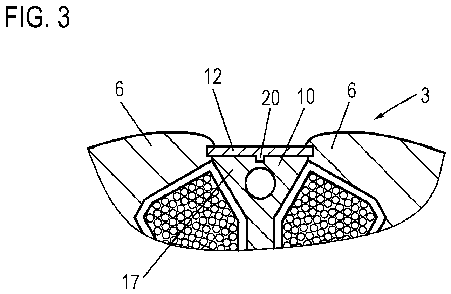

In Fig. 3 ist eine schematische Seitenansicht eines zweiten Ausführungsbeispiels eines Rotors 3 einer elektrischen Maschine 2 gezeigt. Ein Unterschied zum ersten Ausführungsbeispiel besteht in dem Stützelement 10 und dem Widerlagerelement 12, welche über eine Nut-Feder-Verbindung 20 aneinander befestigt sind. Dabei weist das Stützelement 10 an seinem radial außenliegenden Ende des Abschnitts 17 eine Nut auf, in welche eine korrespondierende Feder eingreift, welche an der radial innenliegenden Seite des Widerlagerelements 12 ausgebildet ist. Es ist auch möglich, dass mehr als eine Nut-Feder-Verbindung 20 vorgesehen ist bzw. dass auch sich in Umfangsrichtung erstreckende Nut-Feder-Verbindungen zwischen dem Stützelement 10 und dem Widerlagerelement 12 ausgebildet sind. Weiterhin ist es auch möglich, dass das Widerlagerelement 12 jeweils eine oder mehrere Nuten aufweist und das Stützelement 10 entsprechende Federn zur formschlüssigen Verbindung mit den Nuten des Widerlagerelements 12 aufweist.

## Patentansprüche

1. Elektrische Maschine umfassend einen Rotor (3) mit einem Rotorkörper (5), wobei der Rotorkörper (5) mehrere, jeweils wenigstens eine aus mehreren Leiterschleifen (7) gebildete Rotorwicklung (8) tragende Pole (6) aufweist, wobei sich die Pole (6) in einer radialen Richtung des Rotors (3) erstrecken und die Leiterschleifen (7) durch jeweils zwischen zwei benachbarten Polen (6) ausgebildete Nuten (9) verlaufen,
**dadurch gekennzeichnet,**
**dass** in den Nuten (9) jeweils zwischen den Rotorwicklungen (8) der benachbarten Pole (6) ein sich in radialer Richtung erstreckendes Stützelement (10) angeordnet ist, welches an einem radial außenliegenden Ende der Nut (9) an einem zwischen den benachbarten Polen (6) radial ortsfest angeordneten Widerlagerelement (12) anliegt, wobei das Stützelement (10) bei einer Rotation und/oder einer Erwärmung des Rotors (3) die Leiterschleifen (7) gegen den Rotorkörper (5) drückt.

2. Elektrische Maschine nach Anspruch 1,
**dadurch gekennzeichnet,**
**dass** das Stützelement (10) zumindest teilweise aus einem thermoplastischen Material besteht.

3. Elektrische Maschine nach Anspruch 2,
**dadurch gekennzeichnet,**
**dass** das Stützelement (10) zumindest teilweise aus Polyamid besteht.

4. Elektrische Maschine nach einem der vorangehenden Ansprüche,
**dadurch gekennzeichnet,**
**dass** das Widerlagerelement (12) an zwei benachbarten Polen (6) befestigt ist, wobei ein sich zwischen den Polen (6) erstreckender und ein die Nut (9) überspannender Abschnitt des Widerlagerelements (12), insbesondere vollständig, an dem Stützelement (10) anliegt.

5. Elektrische Maschine nach einem der vorangehenden Ansprüche,
**dadurch gekennzeichnet,**
**dass** die gegenüberliegenden Pole (6) jeweils eine Befestigungsnut (13) aufweisen, wobei das Widerlagerelement (12) durch jeweils einen randseitigen Eingriff in die Befestigungsnuten (13) an den Polen (10) befestigt ist.

6. Elektrische Maschine nach einem der vorangehenden Ansprüche,
**dadurch gekennzeichnet,**
**dass** das Widerlagerelement (12) ein Deckschieber ist.

7. Elektrische Maschine nach einem der vorangehenden Ansprüche,
**dadurch gekennzeichnet,**
**dass** das Widerlagerelement (12) zumindest teilweise aus Metall, insbesondere einem austenitischen Stahl, oder aus Keramik besteht.

8. Elektrische Maschine nach einem der vorangehenden Ansprüche,
**dadurch gekennzeichnet,**
**dass** das Stützelement (10) an dem radial innenliegenden Ende der Nut (9) an dem Rotorkörper (5) anliegt.

9. Elektrische Maschine nach einem der vorangehenden Ansprüche,
**dadurch gekennzeichnet,**
**dass** eine Breite eines Querschnittprofils des Stützelements (10) zumindest abschnittsweise in radialer Richtung nach außen zunimmt.

10. Elektrische Maschine nach einem der vorangehenden Ansprüche,
**dadurch gekennzeichnet,**
**dass** das Stützelement (10) und das Widerlagerelement (12) über eine wenigstens eine Nut-Feder-Verbindung (20) umfassende formschlüssige Verbindung ineinander eingreifen.

11. Elektrische Maschine nach einem der vorangehenden Ansprüche,
**dadurch gekennzeichnet,**
**dass** an einer Innenwand der Nuten (9) und/oder an dem Verdrängungskörper eine Nutisolation (8), insbesondere ein isolierendes Papier und/oder einer isolierende Beschichtung, angeordnet ist.

12. Elektrische Maschine nach einem der vorangehenden Ansprüche,
**dadurch gekennzeichnet,**
**dass** der Rotorkörper (5) aus einem mehrere Bleche umfassenden Blechpaket gebildet ist und das Stützelement (10) wenigstens ein sich in axialer Richtung erstreckendes Durchgangsloch (19) aufweist, wobei in dem wenigstens einen Durchgangsloch ein Zuganker zur Befestigung der Bleche aneinander angeordnet ist.

13. Kraftfahrzeug umfassend eine elektrische Maschine (2) nach einem der vorangehenden Ansprüche.
